# DEMANDE DE BREVET EUROPEEN

(11) **EP 4 763 615 A1**
(43) Date de publication de la demande: **24.06.2026**
(21) Numéro de dépôt: 25224459.5
(22) Date de dépôt: 17.12.2025
(51) Int. Cl.: B60P 7/08

(54) **DISPOSITIF DE RETENUE DE CHARGE DANS UN VÉHICULE**

(30) Priorité: 20.12.2024 FR 2415001
(71) Demandeur: Gruau Laval, 53940 Saint-Berthevin (FR)
(72) Inventeur: BOSCHER, David, 53942 Saint Berthevin Cedex (FR)
(74) Mandataire: Vidon Brevets & Stratégie

(57) **Abrégé**

L'invention concerne un dispositif (100) de retenue de charge (C) dans un véhicule (10), caractérisé en ce qu'il comprend un cavalier (110) intégrant un axe (113), ledit dispositif (100) comprenant également une butée (120) présentant une rainure (126) dans laquelle est reçu l'axe (113) du cavalier (110), ladite butée (120) étant montée mobile sur le cavalier (110) entre une position de blocage et une position de libération.

## Description

### Domaine de l'invention

Le domaine de l'invention est celui de la logistique et plus spécifiquement celui de la conception et de la fabrication de solutions de transport.

Plus particulièrement, l'invention concerne, en particulier mais non exclusivement, un dispositif de retenue de charge dans un véhicule.

### État de la technique

Les véhicules de transport permettent le transport de produits, qu'il s'agisse d'objets ou de denrées alimentaires, depuis un entrepôt jusqu'à une destination finale qu'il s'agisse d'un magasin ou d'une habitation. Ces véhicules prennent généralement la forme de camions ou de camionnettes de livraison, qui disposent d'un volume de stockage à l'intérieur duquel prennent place des chariots ou des caisses contenant les produits à livrer. Les chariots ou caisses sont plus classiquement désignés par des charges. Les termes chariots, charge, ou caisses pourront être utilisés aléatoirement par la suite pour identifier un même élément.

Cette organisation permet ainsi d'optimiser les délais de livraison puisque les produits peuvent être disposés dans des chariots en étant regroupés par catégories, ce qui permet une préparation des chariots avant le transport, puis un déchargement facilité en magasin, voire une mise en rayon simplifiée puisque les produits peuvent être regroupés par rayons.

Pour faciliter leur quotidien, de plus en plus de personnes ont recours à la livraison de produits à domicile. L'utilisation des chariots permet ainsi de regroupés les produits d'une même commande dans un même chariots, et éventuellement de disposés plusieurs commandes dont le lieu de livraison est proche dans un même chariot. Cela facilite alors le travail des livreurs.

Si l'utilisation de chariots offre de nombreux avantages pour les livraisons, elle n'est pas sans inconvénients en ce qui concerne le transport.

En effet, lorsqu'ils sont disposés dans le volume de stockage des véhicules de transport, les chariots doivent être bloqués dans leurs déplacements.

Plus particulièrement, le déplacement des chariots dans le volume de stockage doit être limité, voire supprimé pour éviter de créer des mouvements pouvant déstabiliser le véhicule de transport en cas de coup de frein brutal par exemple.

Autrement dit, lorsqu'ils sont libres de déplacement dans le volume de stockage, les chariots forment des poids mobiles qui peuvent, par leur poids, déstabiliser le véhicule en cas de changement d'allure ou d'aspérités sur une voie de circulation.

En outre, le déplacement des chariots peut provoquer des chocs entre les chariots, ces chocs pouvant conduire à la dégradation des produits transportés au risque de les rendre impropres à la consommation, par exemple pour des produits conditionnés sous atmosphère protectrice qui viendrait à se dégrader à la suite d'un choc avec un produit voisin.

Pour éviter ce type de désagréments, les chariots sont classiquement maintenus dans les véhicules par l'intermédiaire de sangles tendues de part et d'autre du volume de stockage.

Cependant l'utilisation de sangle n'est pas sans inconvénients.

En effet, les sangles peuvent se détendre à mesure du voyage et ainsi limiter le blocage des chariots qui disposent alors d'un débattement permettant leur mouvement.

En outre, les sangles peuvent être mal tendues, provoquant les mêmes risques de liberté de mouvement des chariots. Cela peut s'expliquer par le fait qu'un effort important peut être requis pour mettre en tension les sangles, un tel effort pouvant être difficile à appliquer pour un utilisateur.

De plus, si les sangles ne sont pas installées, l'utilisateur n'est pas prévenu de cette absence. Les chariots sont donc libres de déplacement dans le volume de stockage sans que le conducteur n'en soit informé.

### Objectifs de l'invention

L'invention a notamment pour objectif de pallier les inconvénients de l'art antérieur.

Plus précisément, l'invention a pour objectif de proposer un dispositif de retenue de charge dans un véhicule, qui permette une retenue efficace de charge sans nécessiter un effort important de la part de l'utilisateur.

L'invention a également pour objectif de fournir un tel dispositif qui soit simple d'utilisation et de maintenance.

L'invention a en outre pour objectif de fournir un tel dispositif qui soit simple de conception, de fabrication et d'installation.

### Exposé de l'invention

Ces objectifs, ainsi que d'autres qui apparaîtront par la suite, sont atteints grâce à l'invention qui a pour objet un dispositif de retenue de charge dans un véhicule, caractérisé en ce qu'il comprend un cavalier destiné à être intégré dans un plancher dudit véhicule, le cavalier présentant :
- une base ;
- deux ailes s'étendant en regard l'une de l'autre depuis la base, et
- un axe s'étendant entre les deux ailes, ledit dispositif comprenant également une butée présentant une rainure dans laquelle est reçu l'axe du cavalier, ladite butée étant montée mobile sur le cavalier entre :
- une position de blocage dans laquelle l'axe du cavalier est reçu à une première extrémité de la rainure de sorte que la butée est bloquée en rotation autour de l'axe par contact d'une portion d'appui de la butée contre la base du cavalier, et
- une position de libération dans laquelle l'axe du cavalier est reçu à une deuxième extrémité de la rainure, la butée étant pivotée autour de l'axe de sorte que la portion d'appui de la butée forme un angle non nul avec la base du cavalier.

Un utilisateur peut ainsi réaliser le blocage d'une charge par simple rotation de la butée, ce qui est simple, rapide et sans effort important.

Par ailleurs, l'angle non nul est choisi de telle sorte que la butée ne forme pas de gêne au déplacement de la charge sur le plancher du véhicule.

Selon un aspect avantageux, la rainure est une rainure droite dont la deuxième extrémité est située plus proche de la portion d'appui comparativement à la première extrémité.

Une telle disposition de la rainure permet de provoquer un écartement de la portion d'appui de la butée par rapport à la base du cavalier à mesure que la butée est déplacée de sa position de blocage à sa position de libération.

Inversement, une telle disposition de la rainure permet de provoquer un rapprochement de la portion d'appui de la butée en direction de la base du cavalier à mesure que la butée est déplacée de sa position de libération à sa position de blocage.

Selon un autre aspect avantageux, la butée comprend un patin, ledit patin étant destiné à venir au contact d'une charge à retenir lorsque la butée est dans sa position de blocage.

Le patin permet ainsi un appui doux conter la charge de sorte à former une partie d'amortissement.

Le patin autorise donc un jeu fonctionnel permettant de limiter une concentration de contraintes entre la charge et le dispositif qui pourrait tendre à endommager le dispositif ou la charge.

Selon un autre aspect avantageux, le patin présente un logement pour la réception d'une partie de la butée, le patin présentant une première excroissance et une deuxième excroissance situées de part et d'autre du logement, la première excroissance présentant une première épaisseur E1 supérieure à une deuxième épaisseur E2 de la deuxième excroissance.

Le patin peut ainsi être monté sur la butée selon deux positions distinctes, une première position dans laquelle la première excroissance est destinée à venir en appui contre la charge, et une deuxième position dans laquelle la deuxième excroissance est destinée à venir en appui contre la charge.

Il est ainsi possible d'adapter le dispositif en fonction de la charge à retenir.

Selon un autre aspect avantageux, la butée est formée par une pièce en U définissant une âme et deux oreilles s'étendant en regard l'une de l'autre depuis ladite âme.

Une telle butée allie ainsi résistance et légèreté permettant de retenir efficacement une charge tout en étant facilement manipulable par un utilisateur car légère.

Selon un autre aspect avantageux, l'âme de la butée est logée dans le logement du patin de sorte que la première excroissance et la deuxième excroissance soient situées chacune de part et d'autre de l'âme.

Cela favorise l'adaptation du dispositif en fonction de la charge à retenir.

En effet en fonction de l'excroissance faisant saillie de la butée, et notamment de son épaisseur, le dispositif peut être adapté aux dimensions de la charge à retenir tout en assurant une retenue efficace.

Selon un autre aspect avantageux, le cavalier présente un bec s'étendant dans le prolongement de la base, ledit bec formant un évasement du cavalier destiné à guider la butée lors de son passage de sa position de libération à sa position de blocage.

Un tel bec facilite la manipulation de la butée de sorte à permettre un blocage efficace de la charge en assurant la venue en contact de la portion d'appui de la butée avec la base du cavalier.

Selon un autre aspect avantageux, la butée comprend également un organe de manipulation.

Un tel organe de manipulation permet d'éviter tout risque de blessure de l'utilisateur par pincement d'un doigt entre la charge et la butée par exemple.

En effet, en utilisant l'organe de manipulation l'utilisateur peut faire évoluer la position de la butée à distance d'une zone de danger dans laquelle il pourrait se pincer entre le dispositif et la charge.

Par ailleurs, l'organe de manipulation permet d'augmenter la puissance de l'effort de l'utilisateur lorsqu'il souhaite faire passer la butée de sa position de blocage à sa position de libération.

Autrement dit, l'utilisateur n'a pas à forcer pour assurer le déplacement de la butée de sa position de blocage vers sa position de libération.

L'invention concerne également un véhicule automobile comprenant un plancher intégrant au moins un dispositif tel que précédemment présenté, dans lequel la butée s'étend sensiblement parallèlement audit plancher, dans la position de libération.

Un tel véhicule permet ainsi, grâce au dispositif, la retenue de charges de manière efficace sans que ledit dispositif ne forme une gêne au chargement ou déchargement de la charge, notamment en positionnant la butée dans sa position de libération.

Selon un aspect avantageux, ledit véhicule présente un caisson ayant une ouverture obturable par un ouvrant, caractérisé en ce que le cavalier est positionné à une distance D de ladite ouverture, ladite distance D étant définie telle sorte que dans sa position de libération la butée forme un obstacle à la fermeture de l'ouvrant.

Ainsi, tant que la butée du dispositif n'est pas dans sa position de blocage, il est impossible à un utilisateur de fermer l'ouvrant. L'utilisateur sait ainsi que la charge n'est pas retenue efficacement, ce qui présente un risque de sécurité.

Pour remédier à cela l'utilisateur peut alors positionner la butée dans sa position de blocage ce qui l'autorise alors à fermer l'ouvrant pour s'assurer d'un transport de la charge en toute sécurité.

### Figures

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés décrits ci-après.

[Fig. 1] La figure 1 est une représentation schématique en vue de côté d'un véhicule comprenant au moins un dispositif de retenue de charge, selon l'invention.

[Fig. 2] La figure 2 une représentation schématique en perspective arrière d'un dispositif de retenue de charge, selon l'invention.

[Fig. 3] La figure 3 est une représentation schématique en perspective avant d'un cavalier du dispositif de retenue de charge, selon l'invention.

[Fig. 4] La figure 4 est une représentation schématique en perspective arrière d'une butée du dispositif de retenue de charge, selon l'invention.

[Fig. 5] La figure 5 est une représentation schématique en vue de côté d'un patin du dispositif de retenue de charge, selon l'invention.

[Fig. 6] La figure 6 est une représentation schématique en vue de côté illustrant l'utilisation du dispositif de retenue de charge, selon l'invention.

### Description détaillée de l'invention

De mêmes éléments ont été désignés par de mêmes références dans les différentes figures. En particulier, les éléments structurels et/ou fonctionnels communs aux différents exemples de réalisation peuvent présenter les mêmes références et peuvent disposer de propriétés structurelles, dimensionnelles et matérielles identiques.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures. Sauf précision contraire, les expressions "environ", "approximativement", "sensiblement", et "de l'ordre de" signifient à 10 % près, de préférence à 5 % près.

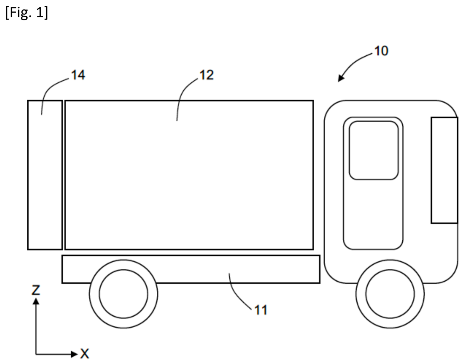

En référence à la figure 1, on définit, par rapport à un véhicule 10, les axes suivants :
- un axe X s'étendant selon une direction longitudinale et définissant un sens de déplacement en marche avant du véhicule 10 ;
- un axe Y s'étendant perpendiculairement à l'axe X et définissant une direction transversale, et
- un axe Z, formant avec l'axe X et l'axe Y un trièdre orthonormé direct.

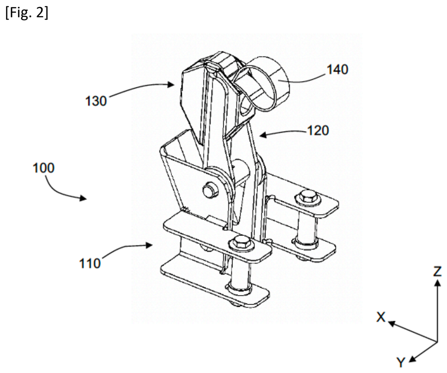

Ledit trièdre est également utilisé sur la figure 2, la figure 3, la figure 4, la figure 5 et la figure 6.

Le véhicule 10 représenté sur la figure 1 est un véhicule 10 du type automobile en ce qu'il comprend des moyens motorisés permettant son déplacement.

Ce véhicule 10 comprend un châssis 11 sur lequel est solidarisé un caisson 12 de transport.

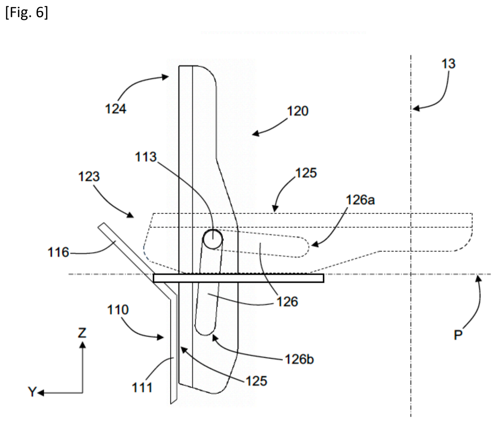

Le caisson 12 a une ouverture 13 (visible sur la figure 6) obturable par un ouvrant 14. En l'espèce l'ouverture 13 est située à l'arrière du caisson 12 et l'ouvrant 14 est un battant, par exemple une porte.

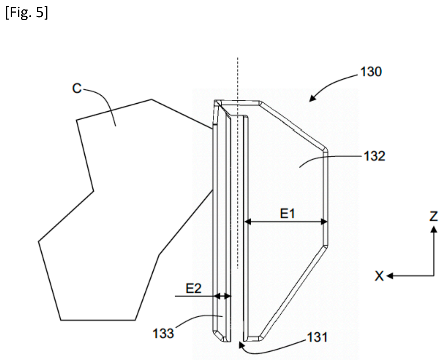

Le caisson 12 de transport permet de loger des charges C (tel qu'illustré de manière schématique sur la figure 5), par exemple des caisses ou chariots contenant des produits.

Lorsqu'elles sont chargées à l'intérieur du caisson 12, les charges C sont maintenues en position pour éviter leur déplacement durant le transport.

Ce maintien en position est réalisé à l'aide d'un dispositif 100 de retenue de charge C.

Le dispositif 100, comprend un cavalier 110 et une butée 120 mobile par rapport au cavalier 110.

Comme cela sera expliqué ci-après, la butée 120 est mobile entre une position de blocage et une position de libération.

Le cavalier 110 est destiné à être intégré dans un plancher dudit véhicule 10.

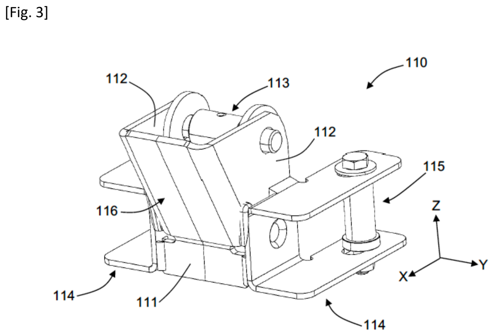

En référence à la figure 3, le cavalier 110 présente :
- une base 111 ;
- deux ailes 112, et
- un axe 113 s'étendant entre les deux ailes 112.

Les deux ailes 112 s'étendent en regard l'une de l'autre depuis la base 110.

Ainsi, lorsque vu en section selon un plan parallèle au plan XY, le cavalier 100 présente une forme de U par sa base 111 et ses ailes 112.

Le cavalier 110 comprend également, contre chaque aile 112, un organe 114 de fixation du cavalier 110 au plancher de véhicule 10. Les organes 114 de fixation sont des pièces en U s'ouvrant sur l'extérieur du cavalier 110.

Le plancher du véhicule 10 prend ainsi place dans le U formé par les organes 114 de fixation. Des boulons 115, traversent alors conjointement le plancher et les organes 114 de fixation pour permettre la fixation du cavalier 110 au plancher. Il est rappelé qu'un boulon comprend une vis et au moins un écrou en prise hélicoïdale avec la vis.

En outre, le cavalier 110 présente un bec 116 s'étendant dans le prolongement de la base 111.

Le bec 116 forme ainsi un évasement du cavalier 110 destiné à guider la butée 120 lors de son passage de sa position de libération à sa position de blocage comme expliqué par la suite.

Tel qu'illustré par la figure 3, les ailes 112 s'étendent à la fois le long de la base 111 et du bec 116.

Ainsi, la base 111, les ailes 112 et le bec 116 forment une même pièce obtenue par exemple par découpe et pliage d'au moins une tôle métallique avec éventuellement un ou plusieurs cordons de soudure.

En variante, la base 111, les ailes 112 et le bec 116 peuvent être venues de matière, par exemple dans le cas précédant par découpage et pliage d'une seule tôle, ou en variante, par usinage d'un brut ou par moulage, voire fabrication additive.

Comme décrit précédemment, le dispositif 100 comprend également une butée 120.

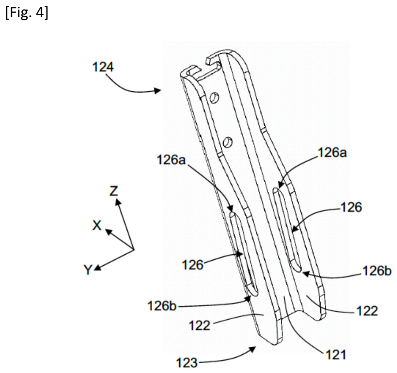

En référence à la figure 4, la butée 120 est formée par une pièce en U définissant une âme 121 et deux oreilles 122 s'étendant en regard l'une de l'autre depuis ladite âme 121.

La butée 121 s'étend entre une extrémité de blocage 123 et une extrémité libre 124. A proximité de l'extrémité de blocage 123, l'âme 121 présente une portion d'appui 125.

La butée 120 présente également une rainure 126 dans laquelle est reçu l'axe 113 du cavalier 110.

La rainure 126 est rectiligne, elle est donc droite, et s'étend entre une première extrémité 126a et une deuxième extrémité 126b.

La butée 120 est montée mobile en rotation sur le cavalier 110 entre :
- une position de blocage, et
- une position de libération.

Dans la position de blocage, l'axe 113 du cavalier 110 est reçu dans la première extrémité 126a de la rainure 126 de sorte que la butée 120 est bloquée en rotation autour de l'axe 113 par contact de la portion d'appui 125 contre la base 111 du cavalier 110. Autrement dit, dans la position de blocage, la portion d'appui 125 et la base 111 du cavalier 110 forme un angle nul puisqu'étant au contact l'une de l'autre. Par analogie, il peut également être entendu par angle nul, une révolution complète, c'est-à-dire 360°.

Dans la position de libération, l'axe 113 du cavalier 110 est reçu dans la deuxième extrémité 126b de la rainure 126, la butée 120 étant pivotée autour de l'axe 113 de sorte que la portion d'appui 125 de la butée 120 forme un angle non nul avec la base 111 du cavalier 110.

Tel que cela est visible sur les figures 4 et 6, la deuxième extrémité 126b de la rainure 126 est située plus proche de la portion d'appui 125 comparativement à la première extrémité 126a.

Comme il sera expliqué par la suite, cela permet que la gravité provoque le rapprochement de la portion d'appui 125 de la butée 120 vers la base 111 du cavalier pour maintenir la position de blocage lorsque la butée passe de la position de libération à la position de blocage.

En référence à la figure 2 et à la figure 5, la butée 120 comprend également un patin 130.

Le patin 130 est destiné à venir au contact d'une charge C (ou plusieurs) à retenir lorsque la butée 120 est dans sa position de blocage.

Tel que cela est visible sur la figure 5, le patin 130 présente un logement 131 pour la réception d'une partie de la butée 120.

Plus en détail, l'âme 121 de la butée 120 est logée dans le logement 131 du patin 130 de sorte que la première excroissance 132 et la deuxième excroissance 133 soient situées chacune de part et d'autre de l'âme 121. Le patin 130 est alors bloqué en déplacement latéral sur l'âme 121 par les oreilles 122.

Le patin 130 présente une première excroissance 132 et une deuxième excroissance 133 situées de part et d'autre du logement 131.

La première excroissance 132 présente une première épaisseur E1 supérieure à une deuxième épaisseur E2 de la deuxième excroissance 133.

En outre, la première excroissance 132 présente une forme sensiblement trapézoïdale dont la plus petite partie est destinée à venir au contact d'une charge C au moins.

Enfin, en référence à la figure 2, la butée 120 comprend également un organe 140 de manipulation.

Cet organe 140 de manipulation se présente sous la forme d'une lanière définissant une boucle saisissable par un utilisateur.

L'organe 140 de manipulation est solidaire de l'âme 121 de la butée 120 et traverse le patin 130 pour être manipulable par un utilisateur.

En référence à la figure 6, le dispositif 100 est représenté étant intégré au plancher P d'un véhicule 10.

Sur la figure 6, la butée 120 est illustrée dans sa position de blocage par des traits pleins et en dans sa position de libération par des traits pointillés.

Dans sa position de libération, la butée 120 s'étend sensiblement parallèlement audit plancher P du véhicule 10.

Lorsqu'il est intégré au plancher P d'un véhicule 10, le cavalier 110 est positionné à une distance D de ladite ouverture 13.

Plus précisément, la distance D est définie de telle sorte que dans sa position de libération la butée 120 forme un obstacle à la fermeture de l'ouvrant 14.

La distance D est mesurée entre la base 111 du cavalier 110 et l'ouverture 13.

En fonctionnement, pour permettre le chargement d'une charge C dans le caisson 12, l'utilisateur positionne la butée 120 dans sa position de libération en saisissant l'organe 140 de manipulation pour faire pivoter la butée 120 de sorte que l'axe 113 initialement positionné dans la première extrémité 126a de la rainure 126 coulisse le long de la rainure 126 pour atteindre la deuxième extrémité 126b.

La butée 120 ne gêne ainsi pas au chargement de la charge C dans le caisson.

Lorsque la charge C est en position dans le caisson 12, l'utilisateur peut de nouveau saisir l'organe 140 de manipulation pour faire pivoter la butée 120 et la positionner dans sa position de blocage. L'axe 113 parcours alors la rainure 126 pour passer de la deuxième extrémité 126b à la première extrémité 126a.

A mesure que l'axe 113 se déplace vers la première extrémité 126a, la portion d'appui 125 de la butée se déplace vers la base 111 du cavalier 110, jusqu'à venir en appui contre cette dernière.

Lorsque la portion d'appui 125 de la butée 120 est au contact de la base 111, la butée est bloquée en rotation autour de l'axe 113 et le patin 130 est au contact de la charge C à retenir.

Préalablement au repositionnement de la butée 120 dans sa position de blocage, l'utilisateur peut choisir l'orientation du patin 130 de sorte à positionner la première excroissance 132 ou la deuxième excroissance 133 au-dessus de la portion d'appui, pour venir au contact de la charge C dans la position de blocage de la butée 120.

Le dispositif qui vient d'être décrit offre de nombreux avantages parmi lesquels ceux qui suivent.

Tout d'abord la sécurité d'utilisation et de retenue des charges C à l'intérieur du véhicule 10.

En effet, lorsque la butée 120 est dans sa position de blocage, il faut un acte volontaire pour la faire passer en position de libération. En d'autres termes, l'effort de la charge C sur la butée 120 ne peut pas permettre sa mise en position de libération.

Cela s'explique par le fait que la portion d'appui 125 de la butée 120 avec la base 111 du cavalier 110 empêche la rotation de la butée 120 autour de l'axe 113.

Il est alors nécessaire de tirer sur la butée 120 via l'organe 140 de manipulation pour permettre la circulation de l'axe 113 dans la rainure 126 depuis la première extrémité 126a jusqu'à la deuxième extrémité 126b ce qui autorise la rotation de la butée 120 autour de l'axe 113 puisque la portion d'appui 125 de la butée 120 et la base 111 du cavalier 110 ne sont plus en contact.

Par ailleurs, le dispositif 100 est simple d'utilisation étant donné qu'il ne demande qu'un mouvement de tirage et un mouvement de rotation de la butée 120 puisque par la gravité la butée 120 peut atteindre sa position de blocage dès lors qu'elle est pivotée pour s'étendre sensiblement verticalement, d'est à dire sensiblement parallèle à l'axe Z.

Enfin, le dispositif 100 est simple de maintenance, de conception, de fabrication et d'installation.

## Revendications

1. Dispositif (100) de retenue de charge (C) dans un véhicule (10), **caractérisé en ce qu'**il comprend un cavalier (110) destiné à être intégré dans un plancher (P) dudit véhicule (10), le cavalier (110)présentant :
- une base (111) ;
- deux ailes (112) s'étendant en regard l'une de l'autre depuis la base (111), et
- un axe (113) s'étendant entre les deux ailes (112), ledit dispositif (100) comprenant également une butée (120) présentant une rainure (126) dans laquelle est reçu l'axe (113) du cavalier (110), ladite butée (120) étant montée mobile sur le cavalier (110) entre :
- une position de blocage dans laquelle l'axe (113) du cavalier (110) est reçu à une première extrémité (126a) de la rainure (126) de sorte que la butée (120) est bloquée en rotation autour de l'axe (113) par contact d'une portion d'appui (125) de la butée (120) contre la base (111) du cavalier (110), et
- une position de libération dans laquelle l'axe (113) du cavalier (110) est reçu à une deuxième extrémité (126b) de la rainure (126), la butée (120) étant pivotée autour de l'axe (113) de sorte que la portion d'appui (125) de la butée (120) forme un angle non nul avec la base (111) du cavalier (110), et **en ce que** la rainure (126) est une rainure droite dont la deuxième extrémité (126b) est située plus proche de la portion d'appui (125) comparativement à la première extrémité (126a).

2. Dispositif (100) selon la revendication précédente, **caractérisé en ce que** la butée (120) comprend un patin (130) , ledit patin (130) étant destiné à venir au contact d'une charge (C) à retenir lorsque la butée (120) est dans sa position de blocage.

3. Dispositif (100) selon la revendication précédente, **caractérisé en ce que** le patin (130) présente un logement (131) pour la réception d'une partie de la butée (120), le patin (130) présentant une première excroissance (132) et une deuxième excroissance (133) situées de part et d'autre du logement (131), la première excroissance (132) présentant une première épaisseur E1 supérieure à une deuxième épaisseur E2 de la deuxième excroissance (133).

4. Dispositif (100) selon l'une quelconque des revendications précédentes, **caractérisé en ce que** la butée (120) est formée par une pièce en U définissant une âme (121) et deux oreilles (122) s'étendant en regard l'une de l'autre depuis ladite âme (121).

5. Dispositif (100) selon les revendications 3 et 4, **caractérisé en ce que** l'âme (121) de la butée 120 est logée dans le logement (131) du patin (130) de sorte que la première excroissance (132) et la deuxième excroissance (133) soient situées chacune de part et d'autre de l'âme (121).

6. Dispositif (100) selon l'une quelconque des revendications précédentes, **caractérisé en ce que** le cavalier (110) présente un bec (116) s'étendant dans le prolongement de la base (111), ledit bec (116) formant un évasement du cavalier (110) destiné à guider la butée (120) lors de son passage de sa position de libération à sa position de blocage.

7. Dispositif (120) selon l'une quelconque des revendications précédentes, **caractérisé en ce que** la butée (120) comprend également un organe (140) de manipulation.

8. Véhicule (10) automobile comprenant un plancher (P) intégrant au moins un dispositif (100) selon l'une quelconque des revendications précédentes, **caractérisé en ce que** dans la position de libération, la butée (120) s'étend sensiblement parallèlement audit plancher (P).

9. Véhicule (10) selon la revendication précédente, ledit véhicule (10) présentant un caisson (12) ayant une ouverture (13) obturable par un ouvrant (14), **caractérisé en ce que** le cavalier (110) est positionné à une distance D de ladite ouverture (13), ladite distance D étant définie telle sorte que dans sa position de libération la butée (120) forme un obstacle à la fermeture de l'ouvrant (14).
